# EUROPEAN PATENT APPLICATION

(11) **EP 4 838 137 A1**
(43) Date of publication of application: **11.11.2026**
(21) Application number: 26169312.1
(22) Date of filing: 30.03.2026
(51) Int. Cl.: F24C 7/08

(54) **METHOD FOR PREVENTING DRY BURNING, CONTROL DEVICE, COOKTOP, RANGE HOOD, AND INTEGRATED COOKER**

(30) Priority: 08.05.2025 CN 202510592215
(71) Applicant: Wuhu Midea Smart Kitchen Appliance Manufacturing Co., Ltd., Wuhu, Anhui 241000 (CN)
(72) Inventor: NING, Guoli, Wuhu, 241000 (CN); ZHOU, Jianbing, Wuhu, 241000 (CN)
(74) Representative: Ran, Handong

(57) **Abstract**

A method for preventing dry burning, a control device (10), a cooktop (30), a range hood (40), and an integrated cooker are provided. The method for preventing dry burning includes: obtaining (S100) a temperature of a cooktop; detecting ( S200) whether a person is present within a preset range of the cooktop in response to that the temperature of the cooktop exceeds a preset temperature threshold for a first preset duration; controlling (S300) the cooktop to operate in a warning state in response to that presence of a person is detected within the preset range of the cooktop; and controlling (S300) the cooktop to perform an anti-dry-burning action in response to that no person is detected within the preset range of the cooktop.

## Description

### TECHNICAL FIELD

The present invention relates to the technical field of cooktop, and in particular to a method for preventing dry burning, a control device, a cooktop, a range hood, and an integrated cooker.

### BACKGROUND

In modern kitchen environments, cooking safety has become an essential aspect that cannot be overlooked in both household and commercial kitchens. As the pace of life accelerates and the functions of kitchen appliances become increasingly complex, situations in which users forget to turn off the cooktop due to negligence or busyness, leading to cookware being dry-burned, have become commonplace. Such situations not only result in food being burnt but may also, in more severe cases, cause fires and pose threats to personal and property safety. Traditional cooktop designs lack effective monitoring and automatic response mechanisms to prevent dry-burning conditions and are unable to dynamically adapt to various complex cooking scenarios and their temperature variation requirements. Therefore, cooktops need to possess the capability to adapt to various complex cooking scenarios, thereby reducing the risk of food being burnt due to continuous heating, or even causing fires, and ensuring the safety of the kitchen environment.

### SUMMARY

The main objective of the present invention is to provide a method for preventing dry burning, a control device, a cooktop, a range hood, and an integrated cooker, which aims to improve the cooktop's ability to prevent dry burning, thereby enhancing kitchen safety and protecting personal and property safety.

To achieve the above objective, the present invention provides a method for preventing dry burning in a cooktop, the method includes:
obtaining a temperature of a cooktop;
detecting whether a person is present within a preset range of the cooktop in response to that the temperature of the cooktop exceeds a preset temperature threshold for a first preset duration;
controlling the cooktop to operate in a warning state in response to that presence of a person is detected within the preset range of the cooktop; and
controlling the cooktop to perform an anti-dry-burning action in response to that no person is detected within the preset range of the cooktop.

Optionally, the controlling the cooktop to operate in the warning state in response to that the presence of person is detected within the preset range of the cooktop further includes:
stopping issuance of a warning in response to that a clearing command is received within a second preset duration after the warning is issued; and
reducing a power level of the cooktop in response to that no clearing command is received within the second preset duration after the warning is issued.

Optionally, the reducing the power level of the cooktop in response to that no clearing command is received within the second preset duration after the warning is issued includes:
reducing the power level of the cooktop to a first power level and controlling the cooktop to issue a second warning in response to that no clearing command is received within the second preset duration after the warning is issued;
controlling the cooktop to stop issuing warnings in response to that a clearing command is received within a third preset duration after the second warning is issued; and
reducing the power level of the cooktop to a second power level in response to that no clearing command is received within the third preset duration after the second warning is issued, the first power level is greater than the second power level.

Optionally, after reducing the power level of the cooktop to the second power level in response to that no clearing command is received within the third preset duration after the second warning is issued, the method further includes:
controlling the cooktop to issue a third warning;
controlling the cooktop to stop issuing warnings in response to that a clearing command is received within a fourth preset duration after the third warning is issued; and
reducing the power level of the cooktop until the cooktop is turned off in response to that no clearing command is received within the fourth preset duration after the third warning is issued, the third warning is of a higher level than the second warning.

Optionally, a sound frequency of the third warning is greater than a sound frequency of the second warning.

Optionally, the controlling the cooktop to perform the anti-dry-burning action in response to that no person is detected within the preset range of the cooktop includes:
controlling the cooktop to issue an initial warning and reduce a power level of the cooktop;
re-detecting whether a person is present within the preset range of the cooktop;
controlling the cooktop to stop issuing warnings in response to that it is determined within a fifth preset duration that a person is present within the preset range of the cooktop and that a clearing command is received; and
gradually reducing the power level of the cooktop until the cooktop is turned off, or directly turning off the cooktop, in response to that it is determined within the fifth preset duration that no person is present within the preset range of the cooktop.

The present invention further provides a control device, which includes a memory, a processor, and a cooktop anti-dry-burning control program stored in the memory and executable on the processor, the cooktop anti-dry-burning control program is configured to implement the method for preventing dry burning.

The present invention further provides a cooktop, which includes a cooktop body, a warning device, and the aforementioned control device. The control device and the warning device are both disposed on the cooktop body. The control device is electrically connected to the warning device, and the control device is used to control the warning device to issue a warning prompt.

The present invention further provides a range hood, which includes a range hood body, a warning device, a communication module, and a control device as described in claim 8. The control device is electrically connected to the warning device and the communication module, and the warning device, the communication module, and the control device are all disposed on the range hood body.

Optionally, the warning device includes an audio prompting component.

The present invention further provides an integrated cooker. The integrated cooker includes a range hood, a cooktop, a warning device, and the control device described above. The range hood and the cooktop are integrally provided. The control device is electrically connected to the warning device and is configured to control the warning device to issue a warning prompt and to control the cooktop to perform an anti-dry-burning action.

In actual applications, by detecting a temperature of the cooktop and activating a distance sensor to further detect person presence when continuous high temperature is detected, a potential dry-burning risk is effectively identified. When a dry-burning risk exists and no person is present on site, the cooktop is controlled to operate in a warning state so as to prompt a user to handle the situation. Once it is determined that a dry-burning risk exists, for example when the cooktop is unattended for a long time and a temperature is excessively high, measures are automatically taken and the cooktop is controlled to perform an anti-dry-burning action, such as reducing power level or turning off the cooktop, so that safety of a cooking process is improved. At the same time, a situation in which short-term high temperature triggers an alarm or automatic flameout is avoided, and sensitivity and accuracy of operation of the cooktop are ensured. Compared with an existing solution in which an anti-dry-burning function is implemented only by relying on temperature in a single dimension, accuracy of cooktop anti-dry-burning control is improved.

### BRIEF DESCRIPTION OF THE DRAWINGS

In order to explain the embodiments of the present invention or the technical solutions in the existing technology more clearly, the accompanying drawings needed to be used in the description of the embodiments or the existing technology will be briefly introduced below. Obviously, the accompanying drawings in the following description are only some embodiments of the present invention, other accompanying drawings can be obtained based on the provided accompanying drawings without exerting creative efforts for those skilled in the art.
FIG. 1 is a flowchart illustrating a method for preventing dry burning according to an embodiment of the present invention.
FIG. 2 is a flowchart illustrating the method for preventing dry burning according to an embodiment of the present invention.
FIG. 3 is a flowchart illustrating the method for preventing dry burning according to an embodiment of the present invention.
FIG. 4 is a flowchart illustrating the method for preventing dry burning according to an embodiment of the present invention.
FIG. 5 is a flowchart illustrating the method for preventing dry burning according to an embodiment of the present invention.
FIG. 6 is a schematic diagram of modules of a cooktop according to an embodiment of the present invention.
FIG. 7 is a schematic diagram of a module of a range hood according to an embodiment of the present invention.

### Description of reference signs:

10, control device;
20, warning device;
30, cooktop body;
40, range hood body.

The present invention will be further explained in conjunction with embodiments and with reference to the accompanying drawings.

### DETAILED DESCRIPTION OF THE EMBODIMENTS

The technical solutions of the embodiments of the present invention will be clearly and completely described below with reference to the drawings of the embodiments of the present invention. It is apparent that the embodiments described herein are merely a portion of the embodiments of the present invention rather than all of the embodiments. All other embodiments obtained by those of ordinary skill in the art based on the embodiments of the present invention without inventive effort fall within the scope of protection of the present invention.

It should be noted that, in this document, step identifiers such as S100 and S200 are used for the purpose of describing corresponding content more clearly and concisely, and do not constitute a substantive limitation on execution order. Those of ordinary skill in the art may, in practical implementation, execute S200 before S100, and such implementations shall fall within the scope of protection of the present invention.

In modern kitchen environments, cooking safety has become an essential aspect that cannot be overlooked in both household and commercial kitchens. As the pace of life accelerates and the functions of kitchen appliances become increasingly complex, situations in which a user forgets to turn off the cooktop due to negligence or busyness, resulting in cookware being dry-burned, have become increasingly common. Such situations not only cause food to be burnt but may also, in severe cases, trigger fires and pose threats to personal and property safety. Traditional cooktop designs lack effective monitoring mechanisms and automatic response mechanisms for preventing dry-burning conditions and are unable to dynamically adapt to various complex cooking scenarios and their temperature variation requirements. Therefore, a cooktop needs to have the capability to adapt to various complex cooking scenarios so as to reduce the risk of food being burnt due to continuous heating, or even causing fires, thereby ensuring the safety of the kitchen environment.

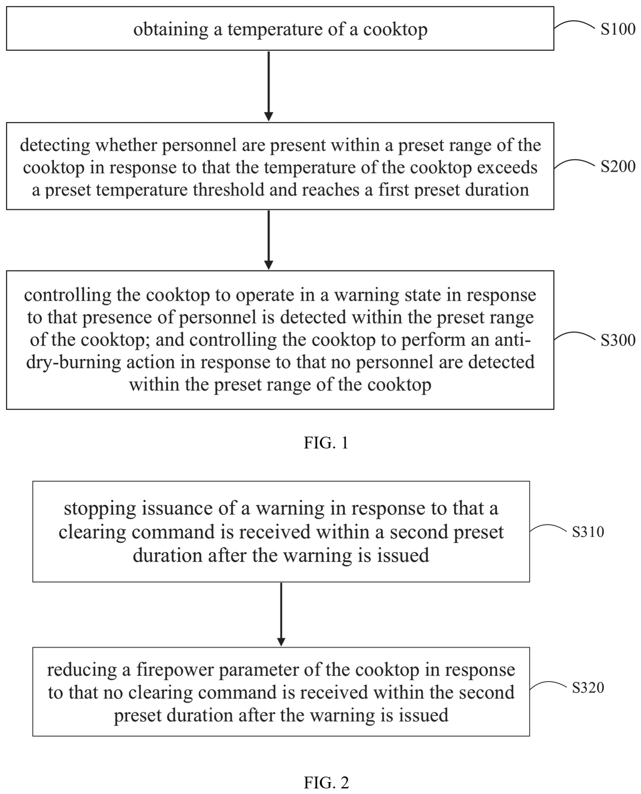

Therefore, as shown in FIG. 1, the present invention provides a method for preventing dry burning, including:
Step S100, obtaining a temperature of a cooktop;
Step S200, detecting whether a person is present within a preset range of the cooktop in response to that the temperature of the cooktop exceeds a preset temperature threshold for a first preset duration;
Step S300, controlling the cooktop to operate in a warning state in response to that presence of a person is detected within the preset range of the cooktop; and
controlling the cooktop to perform an anti-dry-burning action in response to that no person is detected within the preset range of the cooktop.

In an embodiment, the method for preventing dry burning of the present invention is applicable to a control device 10 of a cooktop, a range hood, or an integrated cooker. The control device 10 includes a memory, a processor, and a cooktop anti-dry-burning control program stored in the memory and executable on the processor, and the cooktop anti-dry-burning control program is configured to implement the steps of the method for preventing dry burning. The control device 10 uses a main controller, for example a microcontroller unit (MCU), a digital signal processor (DSP), a field programmable gate array (FPGA), a programmable logic controller (PLC), or a system on chip (SOC).

In an embodiment, a cooktop includes an electromagnetic valve, a temperature sensor, and a distance sensor. The temperature sensor is used to acquire a temperature of cookware. The electromagnetic valve is electrically connected to the control device 10, and the control device 10 controls a working state of the cooktop by controlling opening or closing of the electromagnetic valve. In an embodiment, the temperature sensor includes a thermocouple sensor, an infrared sensor, or the like. By installing a temperature sensor on a surface of the cooktop, a temperature of a heating area of the cooktop is detected. In addition, multiple temperature sensors may be installed at different positions of the cooktop to form a distributed monitoring network, so as to more comprehensively capture a temperature distribution of the heating area of the cooktop and avoid misjudgment caused by local overheating. In an embodiment, the distance sensor includes an ultrasonic sensor, an infrared (PIR) sensor, a camera, or a pressure sensor, and is used to detect whether a person is present within a preset range of the cooktop. A pressure sensor is laid on a ground surface near the cooktop, and whether a person approaches the cooktop is determined by detecting whether foot pressure is present. When the pressure sensor detects that a pressure value of the ground surface in front of the cooktop is greater than a preset pressure threshold, a person is determined to be present within the preset range of the cooktop. When the pressure value detected by the pressure sensor is less than or equal to the preset pressure threshold, a person is determined to be absent within the preset range of the cooktop. A camera is installed above the cooktop, and a picture within the preset range is analyzed by using an artificial intelligence algorithm stored in advance in the control device 10, for example to identify whether a person appears within the preset range of the cooktop based on human contour and motion features.

In the embodiment, the control device 10 further includes a timer, which starts timing when it is determined based on a temperature detection signal output by the temperature sensor that a temperature of the cooktop is greater than a preset temperature threshold, acquires a timing duration, and controls the distance sensor to detect whether a person is present within a preset range of the cooktop in response to that the timing duration reaches a first preset duration. According to a detection result of person presence, the control device 10 controls the cooktop to enter different working states. When the temperature of the cooktop is greater than the preset temperature threshold, the cooktop is in a high-temperature condition. A duration for which the cooktop remains in the high-temperature condition is recorded by the timer, and it is determined whether the duration reaches the first preset duration. When the duration for which the temperature of the cooktop remains high is less than the first preset duration, the high-temperature condition is temporary and will not cause a dry-burning situation, and no control processing is required. Therefore, detection of person presence within the preset range is not needed. When the duration for which the temperature of the cooktop remains high is greater than or equal to the first preset duration, the cooktop is in a continuous high-temperature condition that may cause a dry-burning situation. Therefore, the distance sensor is activated to determine whether a person is present within the preset range of the cooktop.

In an embodiment, a cooktop further includes a warning module, and the warning module is used to receive a control instruction sent by the control device 10 to issue or stop issuing warning information. The warning module includes a display component, a lighting prompting component, and an audio prompting component. The warning module is provided on any one of a range hood, an integrated cooker, and a cooktop. The display component includes a display, the audio prompting component includes a buzzer, and the lighting prompting component includes a light emitting diode (LED) lamp. When the control device 10 detects, based on a distance detection signal output by the distance sensor, that a person is present within a preset range of the cooktop, a normal cooking state is determined, the control device 10 controls the cooktop to operate in a warning state, and, in order to avoid interfering with normal cooking, a current power level is maintained, and a user can freely monitor a cooking state of the cooktop, thereby improving user experience. A trigger component such as a key or a button is provided on the cooktop, the range hood, or the integrated cooker so that, when the control device 10 receives a trigger signal output by the trigger component, the control device 10 controls the warning module to be in a non-working state to stop issuing warnings. In this way, while the control device 10 keeps the cooktop operating at the current power level, the control device 10 also controls the warning module to issue a warning to prompt the user that the cooktop is in a high-temperature state and has a risk of dry burning, and at this time the user can trigger the trigger component to turn off warning information of the warning module. It is understood that, when the user performs operations such as deep frying or pan-frying, the user may not have time to trigger the trigger component in response to high-temperature warning information issued by the warning module. In an embodiment, the cooktop further includes a camera, the camera is used to acquire gesture information of the user, and the gesture information of the user is matched against preset gesture information. When the gesture information matches turn-off operation information in the preset gesture information, the warning module is controlled to stop issuing warnings. In this way, user convenience is improved. In addition, when the control device 10 determines, based on the distance detection signal output by the distance sensor, that no person is present within the preset range of the cooktop, a potential dry-burning risk is determined, the control device 10 controls the cooktop to perform an anti-dry-burning action, for example by automatically reducing power level or turning off the cooktop by controlling the electromagnetic valve. At the same time, the user is further reminded to pay attention to cooking safety by voice or lighting through the warning module.

In actual applications, by detecting a temperature of a cooktop and activating a distance sensor to detect person presence when continuous high temperature is detected, a potential dry-burning risk is effectively identified. When a dry-burning risk is present and no person is on site, the cooktop is controlled to operate in a warning state to prompt a user to handle the situation. Once it is determined that a dry-burning risk exists, for example that the cooktop is left unattended for a long time and the temperature is excessively high, measures are automatically taken, and the cooktop is controlled to perform an anti-dry-burning action, for example reducing power level or turning off the cooktop, thereby improving safety of a cooking process. At the same time, a situation in which an alarm is triggered or the cooktop is automatically turned off due to a high temperature occurring within a short time period is avoided, thereby ensuring sensitivity and accuracy of operation of the cooktop. Compared with an existing solution in which a dry-burning prevention function is implemented only by relying on temperature as a single dimension, accuracy of cooktop anti-dry-burning control is improved.

In an embodiment, as shown in FIG. 2, the controlling the cooktop to operate in the warning state in response to that the presence of a person is detected within the preset range of the cooktop further includes:
Step S310, stopping issuance of a warning in response to that a clearing command is received within a second preset duration after the warning is issued.

In combination with the above embodiment, when the control device 10 determines, based on a temperature detection signal output by the temperature sensor, that a temperature of a heating area of the cooktop (including a preset range) exceeds a preset temperature threshold continuously for a first preset duration, the control device 10 activates a distance sensor. The distance sensor detects whether a person is present within a preset range of the cooktop. If a person is detected, the cooktop is controlled to operate in a warning state, a power level of the cooktop is not adjusted at first, and a first warning signal is issued by controlling a warning module. A warning mode can be an audible alarm (buzzer), a visual reminder (flashing LED lamp), or a voice prompt given by an internal voice module, for example: "Please note that the current cooktop temperature is high, please check a cooking state." In the warning state, the control device 10 responds to received user commands. The user commands include trigger signals triggered by a user in forms such as keys, gestures, or voice, or clearing commands output by an external terminal.

In an embodiment, within a second preset duration (for example 30 seconds) after a first warning is issued, the control device 10 is in a listening state and waits for a clearing command from a user. The user sends the clearing command in multiple ways, for example by pressing a specific button on the cooktop or touching a "clear warning" key on a panel of a range hood linked with the cooktop or on a panel of the cooktop itself, or by making a predefined gesture action (such as waving a hand) by using a gesture recognition function to turn off the warning, or by remotely sending an instruction to cancel the warning through an application on a mobile phone that communicates with a communication module in the cooktop. In an embodiment, a warning is performed by causing a certain key to flash for two minutes or to flash in synchronization with certain lighting, and a warning prompt is cleared when the user presses the key. In addition, multiple warning modules including lighting, sound, and display are used to provide a warning. For example, when a person is detected, the control device 10 controls a buzzer to give an alarm and simultaneously controls lighting to flash. Once the control device 10 receives a valid clearing command, that is, a clearing command is received within 30 seconds after the first warning is issued, the control device 10 immediately stops a warning module from issuing a warning signal, restores a normal operation mode, and allows the user to continue cooking without interference. In this way, when the user has a need to use long-term high temperature, such as for pan-frying or deep frying, interference is avoided and problems such as false triggering of an alarm or adjustment of a power level are reduced.

Step S320, reducing a power level of the cooktop in response to that no clearing command is received within the second preset duration after the warning is issued.

In an embodiment, if no clearing command is received within a second preset duration (for example 30 seconds), a user may have left temporarily or failed to notice warning information, and for safety the control device 10 automatically takes further measures. For example, a power level of the cooktop is reduced to reduce heat output so as to prevent a potential dry-burning risk. For instance, the power level is adjusted from a maximum level to a medium level or a lower level. At the same time, a warning intensity of a warning module is further enhanced, for example by increasing a sound frequency of a buzzer, changing a color or a flashing mode of a LED lamp, or even playing a more urgent voice prompt: "Warning! The cooktop has been unattended for a long time, the power level is being automatically adjusted." At this time, the control device 10 continues in a listening state and waits for a clearing command from the user. For example, if a clearing command is received within 20 seconds, no further automatic control is performed, a current power level is maintained, and user power level adjustment operation commands are responded to. Otherwise, if no clearing command is received within 20 seconds, in order to avoid a dry-burning situation, the control device 10 controls an electromagnetic valve to close so as to completely turn off the cooktop and ensure safety.

The method for preventing dry burning of the present invention provides timely warnings via an alarm module when the cooktop detects continuous high temperature and someone is present. It also dynamically adjusts its control strategy based on the user's response, effectively preventing dry-burning accidents. This not only improves kitchen safety but also enhances the user experience, making the cooking process more intelligent and user-friendly.

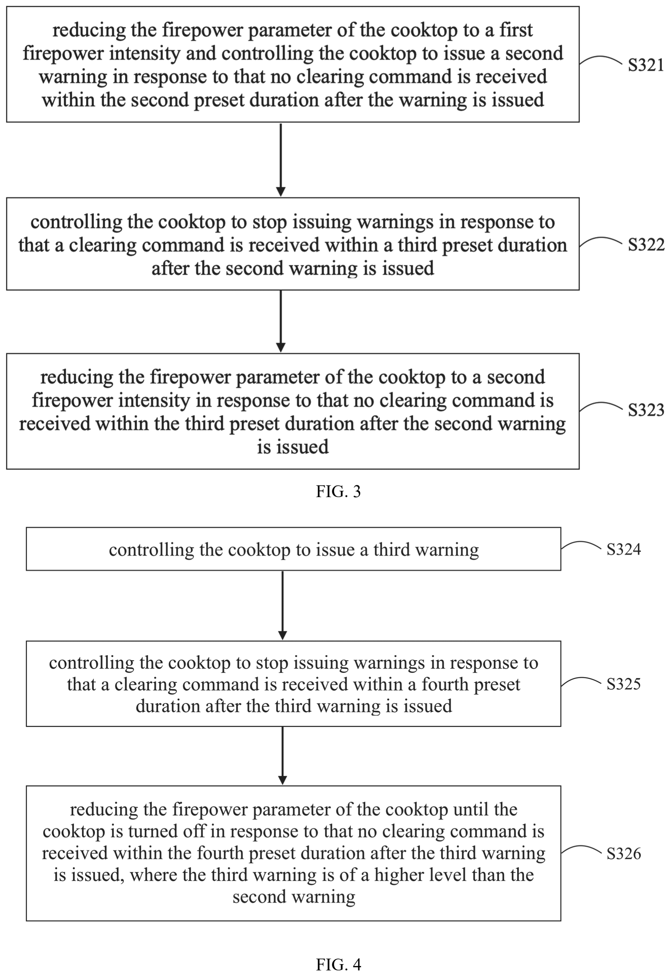

In another embodiment, as shown in FIG. 3, step S320 specifically includes :
Step S321, reducing the power level of the cooktop to a first power level and controlling the cooktop to issue a second warning in response to that no clearing command is received within the second preset duration after the warning is issued.

In combination with the above embodiment, when it is detected that a temperature of a heating area of the cooktop exceeds a preset temperature threshold continuously for a first preset duration (for example 2 minutes), person presence within a preset range of the cooktop is detected; if a person is detected, a warning state is entered, a first warning signal is immediately issued through a warning module, and when a clearing command is received within a second preset duration (for example 50 seconds) after the first warning is issued, the cooktop is controlled to stop issuing warnings, a normal operation mode is restored, and a user is allowed to continue cooking without interference. If no clearing command is received within the second preset duration after the first warning is issued, the user may have left temporarily or failed to notice warning information, and for safety, further measures are automatically taken.

In this embodiment, the control device 10 reduces a power level of the cooktop from a current level to a first power level (for example 50% power), and at the same time enhances a warning intensity and issues a second warning. For example, a sound frequency of a buzzer is increased. In an embodiment, the warning module includes multiple components, and includes at least two of a buzzer, a LED lamp, and a voice module. In this way, while the sound frequency of the buzzer is increased, a more urgent voice prompt is played, for example: "Warning! The cooktop has been unattended for a long time, the power level is being automatically adjusted to 50%." In an embodiment, an LED lamp is controlled to change from yellow to flashing red.

Step S322, controlling the cooktop to stop issuing warnings in response to that a clearing command is received within a third preset duration after the second warning is issued.

In an embodiment, within a third preset duration (for example 30 seconds) after a second warning is issued, the control device 10 is again in a listening state and waits for a clearing command from a user. The user sends the clearing command by pressing a "confirm" button or by making a predefined gesture. If a valid clearing command is received within the 30 seconds, all warning signals are immediately stopped. In an embodiment, a power level of the cooktop is further restored to a level set by the user, or subsequent power level adjustment operation commands from the user are responded to, so that the user is allowed to continue cooking.

Step S323, reducing the power level of the cooktop to a second power level in response to that no clearing command is received within the third preset duration after the second warning is issued.

In an embodiment, the first power level is greater than the second power level.

In an embodiment, if no clearing command is received within the third preset duration after the second warning is issued, the control device 10 further reduces a power level of the cooktop to a second power level (for example 20% power) to reduce a dry-burning risk. At this time, the control device 10 may also issue a final warning, and if no clearing command is still received, the cooktop is completely turned off to ensure safety. In an embodiment, when no clearing command is received within the third preset duration after the second warning is issued, the control device 10 directly turns off the cooktop, and in this case the second power level is 0.

In actual applications, if no clearing command from a user is received after a first warning is issued, a power level is gradually reduced, for example from a current level to 50% and then to 20%, and in an extreme case the cooktop is automatically turned off to prevent occurrence of a fire accident. By gradually reducing power level, impact on normal cooking activities is minimized while safety is ensured, so that an entire cooking process is improved in terms of safety and intelligence.

In an embodiment, as shown in FIG. 4, after step S323, the method further includes:
Step S324, controlling the cooktop to issue a third warning.

In an embodiment, if no clearing command is still received within a third preset duration after a second warning is issued, a power level of the cooktop is further reduced to a second power level (for example 20% power), and at the same time the cooktop is controlled to issue a third warning. A sound frequency of the third warning is greater than a sound frequency of the second warning. For example, a sound frequency of a buzzer when the buzzer issues the third warning is greater than a sound frequency of the buzzer when the buzzer issues the second warning, so as to attract a high level of attention from a user. In an embodiment, when a warning module is a lighting prompting component, a warning level is further increased by increasing a flashing frequency of the lighting prompting component. In an embodiment, when the warning module is a voice prompting module, a more urgent voice prompt is played when the third warning is issued, for example: "Serious warning! Please check the cooktop immediately, otherwise the cooktop will be turned off automatically!" In this way, even when the user performs pan-frying or deep frying, an increased warning intensity prompts the user to make a response, otherwise a dry-burning situation occurs.

Step S325, controlling the cooktop to stop issuing warnings in response to that a clearing command is received within a fourth preset duration after the third warning is issued.

In an embodiment, within a fourth preset duration (for example 20 seconds) after a third warning is issued, the control device 10 is in a listening state and waits for a clearing command from a user. For example, the warning is turned off by using a gesture recognition function.

If the user makes a predefined gesture action, such as waving a hand, within the 20 seconds, that is, a valid clearing command is received, the control device 10 immediately controls a warning module to stop outputting a warning signal and allows the user to continue cooking.

Step S326, reducing the power level of the cooktop until the cooktop is turned off in response to that no clearing command is received within the fourth preset duration after the third warning is issued, where the third warning is of a higher level than the second warning.

In an embodiment, if no clearing command is still received within 20 seconds after the third warning is issued, the cooktop is automatically turned off in order to completely eliminate a dry-burning risk, for example by cutting off a gas supply or a power supply.

It should be noted that a warning level of the third warning is higher than a warning level of the second warning and a warning level of the first warning, so as to indicate to a user that the third warning is a final serious warning.

The method for preventing dry burning of the present invention provides corresponding safety prompts at different stages by progressively increasing warning levels, so as to ensure that a user is able to notice a potential dry-burning risk in a timely manner. In particular, the third warning, as a final serious warning, informs the user that the cooktop will be automatically turned off if the user does not respond immediately, which greatly improves user alertness and helps prevent potential dangers, thereby ensuring safety while minimizing impact on normal cooking activities.

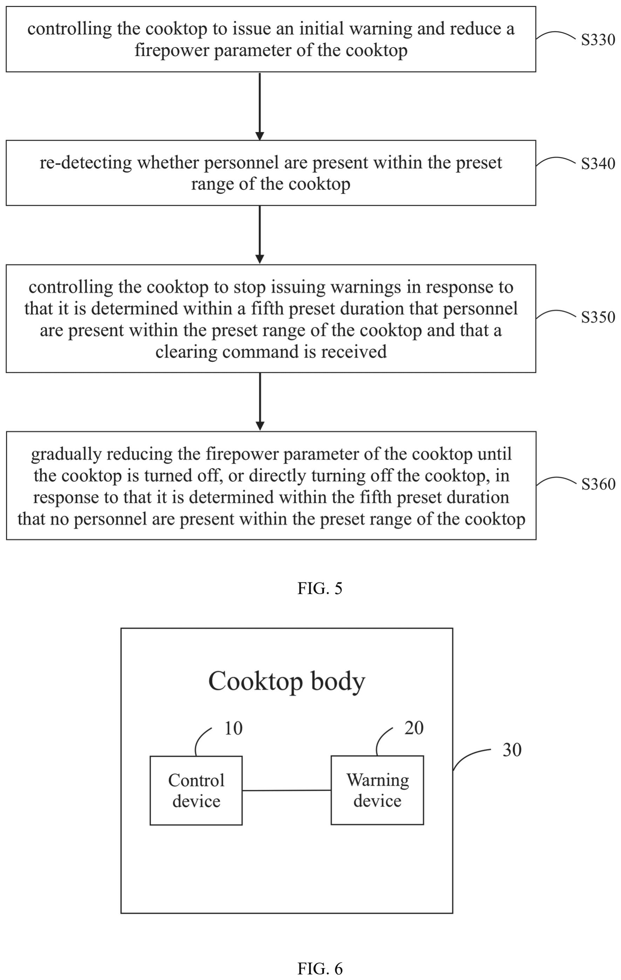

In an embodiment, as shown in FIG. 5, the controlling the cooktop to perform the anti-dry-burning action in response to that no person is detected within the preset range of the cooktop includes:
Step S330, controlling the cooktop to issue an initial warning and reduce a power level of the cooktop.

In combination with the above embodiment, when a temperature sensor detects that a temperature of a heating area of a cooktop exceeds a preset temperature threshold continuously for a first preset duration (for example 2 minutes), person presence within a preset range of the cooktop is detected. If no person is present, the cooktop is controlled to perform an anti-dry-burning action. This is different from a warning state and focuses more on autonomous decision-making by the control device 10. That is, when the control device 10 detects that the cooktop is in a high-temperature state and no person is present around the cooktop, the control device 10 automatically adjusts a working state of the cooktop according to a preset control program. For example, a power level of the cooktop is reduced to avoid a dry-burning phenomenon caused by continuous high temperature. At the same time, a first warning is further issued by a warning module so as to attract attention of a user and prompt the user to go to the kitchen to check a cooking condition.

Step S340, re-detecting whether a person is present within the preset range of the cooktop.

In an embodiment, after a first warning is issued, the control device 10 controls the distance sensor to re-detect whether a person is present within the preset range of the cooktop so as to determine whether a user has returned to the kitchen. In this way, when person presence changes from no person present to person present, the power level may be restored or a next operation by the user may be awaited. If no person is still detected, a power level may be further reduced or the cooktop may be directly turned off so as to ensure kitchen safety.

Step S350, controlling the cooktop to stop issuing warnings in response to that it is determined within a fifth preset duration that a person is present within the preset range of the cooktop and that a clearing command is received.

In combination with the above embodiment, if the control device 10 determines within a fifth preset duration (for example 1 minute) after a first warning is issued that a person has returned to a preset range of the cooktop and that a clearing command has been sent by a user through a corresponding button or a predefined gesture action, a warning module of the cooktop is controlled to stop issuing a warning. To improve user convenience, an operating mode of the cooktop may also be restored to an operating mode set by the user, and the user is allowed to continue cooking without interference.

Step S360, gradually reducing the power level of the cooktop until the cooktop is turned off, or directly turning off the cooktop, in response to that it is determined within the fifth preset duration that no person is present within the preset range of the cooktop.

In this embodiment, if it is determined within a fifth preset duration after a first warning is issued that no person is still present within a preset range of the cooktop, in order to reduce a dry-burning risk, the control device 10 further reduces a power level of the cooktop. In an embodiment, the control device 10 gradually reduces the power level of the cooktop until the cooktop is turned off. That is, after each reduction of the power level, the control device 10 redetects whether a person is present within the preset range of the cooktop. If no valid clearing command is received each time, the power level is further reduced at a preset time interval and by a preset decrement until the power level is finally reduced to a minimum level and the cooktop is then turned off. In this way, a certain period of time is reserved for a user to return to the kitchen and take corresponding measures, and impact on a normal cooking process is minimized. In an embodiment, when it is determined within the fifth preset duration based on person presence that no person is present within the preset range of the cooktop, the cooktop is directly turned off, and an energy supply of the cooktop is immediately cut off. That is, when only one warning (the first warning) is issued and no clearing command is received from the user, the cooktop is directly turned off so as to completely eliminate a risk in an unattended situation and improve safety.

It should be noted that the control device 10 uses historical data of the temperature sensor to calculate a rate of change of a temperature of the cooktop (a temperature increase speed per unit time). When a temperature increase speed is determined, according to the rate of change, to be high (for example greater than 5° C per second, and a preset rate of change is 5° C/second), a high dry-burning risk is determined and the cooktop is directly turned off. In an embodiment, control is performed according to a duration for which the temperature is maintained at a high temperature level. For example, when a duration for which the temperature exceeds a preset temperature threshold reaches a sixth preset duration, a high-risk state is determined and a measure of turning off the cooktop is taken even if the temperature increase speed is low. The sixth preset duration is greater than the first preset duration and is set in advance by research and development personnel. Conversely, when the temperature increase speed is determined, according to the rate of change, to be low (less than the preset rate of change), a low dry-burning risk is determined and a power level of the cooktop is continuously reduced. In this way, the cooktop is directly turned off when a duration for which the temperature exceeds the preset temperature threshold reaches the sixth preset duration or when the power level of the cooktop has been reduced to a minimum. The first preset duration, the second preset duration, the third preset duration, the fourth preset duration, the fifth preset duration, and the sixth preset duration are any durations and are set in advance by research and development personnel.

By combining temperature data of the cooktop, such as a temperature value, a temperature change rate, and a duration of continuous high temperature, a dry-burning risk is determined more accurately, and misjudgment or delayed response is avoided. When no person is detected within the preset range of the cooktop, the power level is reduced or the cooktop is directly turned off, so as to effectively reduce a dry-burning risk while minimizing impact on normal cooking activities. In a low-risk situation, only a power level is reduced instead of directly turning off the cooktop, thereby reducing interference with a cooking process of a user. In a high-risk situation, the cooktop is turned off to ensure safety. In this way, user experience is improved.

The present invention provides a control device 10, which includes a memory, a processor, and a cooktop anti-dry-burning control program stored in the memory and executable on the processor. The cooktop anti-dry-burning control program is configured to implement the method for preventing dry burning as described in any of the above embodiments.

It should be noted that, because the control device 10 of the present invention is implemented based on the above method for preventing dry burning, embodiments of the control device 10 of the present invention include all technical solutions of all embodiments of the above method for preventing dry burning, and technical effects achieved are also completely the same, and details are not repeated here.

The present invention further provides a cooktop, as shown in FIG. 6, the cooktop including a cooktop body 30, a warning device 20 and the aforementioned control device 10, the control device 10 and the warning device 20 are both provided on the cooktop body, the control device 10 is electrically connected to the warning device 20, and the control device 10 is used to control the warning device 20 to issue a warning prompt.

In this embodiment, a cooktop includes a gas cooktop, an induction cooktop, or an electric ceramic cooktop. A warning device 20 includes the warning module described in the above embodiments. The control device 10 controls the warning device 20 to issue a first warning, a second warning, and a third warning and other multi-level warnings according to an obtained temperature of the cooktop and person presence so as to prompt a user to discover and handle a situation in a timely manner.

In an embodiment, the warning device 20 includes an audio prompting component. The audio prompting component is implemented by using a buzzer, a loudspeaker, an audible and visual alarm, a vibration motor, or the like. A loudness of sound is changed by adjusting a voltage or a current of a driving circuit of the buzzer. For example, an input power of the buzzer is controlled by using a pulse width modulation (PWM) signal so as to adjust a warning level of the audio prompting component. In an embodiment, the buzzer is controlled to emit intermittent sound or continuous sound to distinguish warning levels. For example, a first warning level corresponds to prompting once per second, a second warning level corresponds to prompting once every 0.5 seconds, and a third warning level corresponds to prompting once every 0.2 seconds. In this way, different warning prompt effects are implemented, which helps maintain kitchen safety.

It should be noted that, because the cooktop of the present invention is implemented based on the control device 10 described above, embodiments of the cooktop of the present invention include all technical solutions of all embodiments of the control device 10 described above, and technical effects achieved are also completely the same, and details are not repeated here.

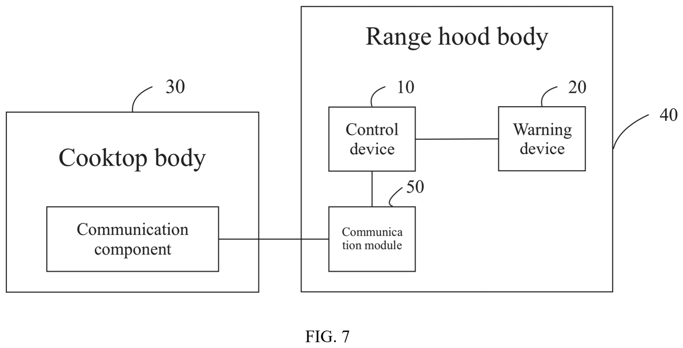

The present invention further provides a range hood. As shown in FIG. 7, the range hood includes a range hood body 40, a warning device 20, a communication module, and the aforementioned control device 10. The control device 10 is electrically connected to the warning device 20 and the communication module, respectively. The warning device 20, the communication module, and the control device 10 are all provided on the range hood body 40.

The control device 10 is used to control the warning device 20 to issue a warning prompt and to output a control signal to the cooktop via the communication module so as to control the cooktop to perform an anti-dry-burning action.

In this embodiment, the cooktop further includes a first communication module used to be in communication connection with the communication module. A detection device, including but not limited to a temperature sensor and a distance sensor, is provided on the cooktop or on a range hood body 40. When the detection device is provided on the cooktop, a detection result of the detection device is output to the communication module through the first communication module so that the control device 10 operates according to the received detection result. When a warning is needed, the control device 10 sends a corresponding control signal to the communication module, and the control signal is output to a control component of the cooktop through the first communication module so as to control the cooktop to perform an anti-dry-burning action, for example by adjusting a power level or directly turning off the cooktop.

The warning device 20 includes an audio prompting component. The audio prompting component is implemented by using a buzzer, a loudspeaker, an audible and visual alarm, a vibration motor, or the like. When the control device 10 controls the audio prompting component to issue a warning, a manner in which a warning level is implemented is as described in the above embodiments, and details are not repeated here.

It should be noted that, because the range hood of the present invention is implemented based on the control device 10 described above, embodiments of the range hood of the present invention include all technical solutions of all embodiments of the control device 10 described above, and technical effects achieved are also completely the same, and details are not repeated here.

The present invention further provides an integrated cooker, which includes a range hood, a cooktop, a warning device 20, and a control device 10 as described in the above embodiments. The range hood and the cooktop are integrally arranged, and the control device 10 is electrically connected to the warning device 20. The control device 10 is used to control the warning device 20 to issue a warning and to control the cooktop to perform an anti-dry-burning action.

The integrated cooker is a kitchen appliance that integrates a cooktop, a range hood, and other functions. The other additional functions include but are not limited to a steamer and an oven. In this way, space occupied by separately installing multiple devices is reduced. In addition, in an integrated cooker, a range hood portion is usually directly provided above the cooktop so as to capture oil fumes and steam generated during cooking at a short distance. Compared with a traditional standalone range hood, a higher fume extraction rate is achieved and residual oil fumes in a kitchen are effectively reduced.

It should be noted that, since the integrated cooker of the present invention is implemented based on the control device 10 described above, embodiments of the integrated cooker of the present invention include all technical solutions of all embodiments of the control device 10 described above, and technical effects achieved are also completely the same, and details are not repeated here.

## Claims

1. A method for preventing dry burning, comprising:
obtaining (S100) a temperature of a cooktop;
detecting (S200) whether a person is present within a preset range of the cooktop in the case that the temperature of the cooktop exceeds a preset temperature threshold for a first preset duration;
controlling (S300) the cooktop to operate in a warning state in response to detecting that a person is present within the preset range of the cooktop; and
controlling (S300) the cooktop to perform an anti-dry-burning action in response to detecting that no person is present within the preset range of the cooktop.

2. The method for preventing dry burning according to claim 1, wherein the controlling the cooktop to operate in the warning state in response to detecting that a person is present within the preset range of the cooktop further comprises:
controlling (S310) the cooktop to stop issuing warnings in the case that a clearing command is received within a second preset duration after a warning is issued; and
reducing (S320) a power level of the cooktop in the case that no clearing command is received within the second preset duration after the warning is issued.

3. The method for preventing dry burning according to claim 2, wherein the reducing the power level of the cooktop in the case that no clearing command is received within the second preset duration after the warning is issued comprises:
reducing (S321) the power level of the cooktop to a first power level and controlling the cooktop to issue a second warning in the case that no clearing command is received within the second preset duration after the warning is issued;
controlling (S322) the cooktop to stop issuing warnings in the case that a clearing command is received within a third preset duration after the second warning is issued; and
reducing (S323) the power level of the cooktop to a second power level in the case that no clearing command is received within the third preset duration after the second warning is issued,
wherein the first power level is higher than the second power level.

4. The method for preventing dry burning according to claim 3, wherein after reducing the power level of the cooktop to the second power level in the case that no clearing command is received within the third preset duration after the second warning is issued, the method further comprises:
controlling (S324) the cooktop to issue a third warning;
controlling (S325) the cooktop to stop issuing warnings in the case that a clearing command is received within a fourth preset duration after the third warning is issued; and
reducing (S326) the power level of the cooktop until the cooktop is turned off in the case that no clearing command is received within the fourth preset duration after the third warning is issued,
wherein the third warning is of a higher level than the second warning.

5. The method for preventing dry burning according to claim 4, wherein a sound frequency of the third warning is greater than a sound frequency of the second warning.

6. The method for preventing dry burning according to any one of claims 1 to 5, wherein the controlling the cooktop to perform the anti-dry-burning action in response to detecting that no person is present within the preset range of the cooktop comprises:
controlling (S330) the cooktop to issue an initial warning and reduce a power level of the cooktop;
re-detecting (S340) whether a person is present within the preset range of the cooktop;
controlling (S350) the cooktop to stop issuing warnings in the case that it is determined within a fifth preset duration that a person is present within the preset range of the cooktop and that a clearing command is received; and
gradually reducing (S360) the power level of the cooktop until the cooktop is turned off, or directly turning off the cooktop, in the case that it is determined within the fifth preset duration that no person is present within the preset range of the cooktop.

7. A control device (10), comprising a memory, a processor, and a cooktop anti-dry-burning control program stored in the memory and executable on the processor, wherein the cooktop anti-dry-burning control program is configured to implement steps of the method for preventing dry burning according to any one of claims 1 to 6.

8. A cooktop, comprising a cooktop body (30), a warning device (20), and the control device (10) according to claim 7, wherein the control device (10) and the warning device (20) are both provided on the cooktop body (30) and are electrically connected to each other, and the control device (10) is configured to control the warning device (20) to issue a warning.

9. The cooktop according to claim 8, wherein the warning device (20) comprises an audio prompting component.

10. A range hood, comprising a range hood body (40), a warning device (20), a communication module, and the control device (10) according to claim 7, wherein:
the control device (10) is electrically connected to the warning device (20) and the communication module;
the warning device (20), the communication module, and the control device (10) are all provided on the range hood body (40); and
the control device (10) is configured to control the warning device (20) to issue a warning prompt and to output a control signal to the cooktop through the communication module to control the cooktop to perform an anti-dry-burning action.

11. The range hood according to claim 10, wherein the warning device (20) comprises an audio prompting component.

12. An integrated cooker, comprising a range hood, a cooktop, a warning device (20), and the control device (10) according to claim 7, wherein:
the range hood and the cooktop are integrally provided;
the control device (10) is electrically connected to the warning device (20); and
the control device (10) is configured to control the warning device (20) to issue a warning and to control the cooktop to perform an anti-dry-burning action.
